# EUROPEAN PATENT SPECIFICATION

(11) **EP 0 318 291 B1**
(45) Date of publication and mention of the grant of the patent: **22.03.1995**
(21) Application number: 88311143.7
(22) Date of filing: 24.11.1988
(51) Int. Cl.: G06T 11/00

(54) **Apparatus and method for generating images from tomographic data**
Vorrichting und Verfahren zur Erzeugung von Bilder aus tomographischen Daten
Dispositif et méthode pour la génération d'images à partir de données tomographiques

(30) Priority: 25.11.1987 US 125662
(43) Date of publication of application: 31.05.1989
(73) Proprietor: GENERAL ELECTRIC COMPANY, Schenectady, NY 12345 (US)
(72) Inventor: Crawford, Carl Ross, Milwaukee Wisconsin 53211 (US)
(74) Representative: Pratt, Richard Wilson

(56) References cited:
- EP-A- 0 182 237
- EP-A- 0 204 225
- EP-A- 0 216 156

## Description

The present invention relates to generating images from tomographic data and, for example, to generating an image while using the dividing cubes method for extracting surface definitions from tomographic data.

Tomographic medical imaging employs the collection of data representing cross sections of a body. A plurality of object interrogations can be processed mathematically to produce representations of contiguous cross-sectional images. Such cross-sectional images are of great value to the medical diagnostician in a non-invasive investigation of internal body structure. The technique employed to collect the data is a matter of indifference to the present invention. Any technique such as, for example, X-ray computed tomography, nuclear magnetic resonance tomography, single-photon emission tomography, positron emission tomography, or ultrasound tomography may serve equally.

A body to be imaged exists in three dimensions. Tomographic devices process data for presentation as a series of contiguous cross-sectional slices along selectable axes through the body. Each cross-sectional slice is made up of a number of rows and columns of voxels (parallelepiped volumes with certain faces corresponding to pixel spacing within each slice and others corresponding to slice spacing), each represented by a digitally stored number related to a computed signal intensity in the voxel. In practice, an array of, for example, 64 slices may each contain 512 by 512 voxels. In normal use, a diagnostician reviews images of a number of individual slices to derive the desired information. In cases where information about a surface within the body is desired, the diagnostician relies on inferences of the 3-D nature of the object derived from interrogating the cross-sectional slices. At times, it is difficult or impossible to attain the required inference from reviewing contiguous slices. In such cases, a synthesized 3-D image is desired.

Synthesizing a 3-D image from tomographic data is a two-step process. In the first step, a mathematical description of the desired object is extracted from the tomographic data. In the second step, the image is synthesized from the mathematical description.

Dealing with the second step first, assuming that a surface description can be synthesized from knowledge of the slices, the key is to go from the surface to the 3-D image. The mathematical description of the object is made up of the union of a large number of surface elements (SURFELS). The SURFELS are operated on by conventional computer graphics software, having its genesis in computer-aided design and computer-aided manufacturing, to apply surface shading to objects to aid in image interpretation through a synthesized two-dimensional image. The computer graphics software projects the SURFELS onto a rasterized image and determines which pixels of the rasterized image are turned on, and with what intensity or color. Generally, the shading is lightest (i.e., most intense) for image elements having surface normals along an operator-selected line of sight and successively darker for those elements inclined to the line of sight. Image elements having surface normals inclined more than 90 degrees from the selected line of sight are hidden in a 3-D object and are suppressed from the display. Foreground objects on the line of sight hide background objects. The shading gives a realistic illusion of three dimensions.

Rendering techniques are commonly used in the field of tomographic imaging. For example, EP-A-204225 discloses a system including a memory for storing 3-D signal patterns representing the value of a physical property associated with a 3-D body at regularly spaced grid locations within the body. Circuitry is provided for retrieving the eight 3-D signal pattern values associated with each set of cubically adjacent grid locations within the body. The system compares each set of 8 values with a given threshold to generate an 8-bit binary vector based on the comparison result. A set of coordinate values is generated for each distinct binary vector, these values representing the vertices of a given polygonal surface which approximates the intersection of surfaces determined by the threshold with the volume defined by the 8 grid points. A non-linear interpolation operation is performed to 3 data values along a line joining associated grid points, providing closer representations of vectors normal to the desired surface. The representation of the normal directions is fed to a display processor and converts coordinate values into a vector-based display format. The shading information is then displayed on a screen.

Returning now to the problem of extracting a mathematical description of the desired surface from the tomographic slice data, this step is broken down into two subtasks, namely the extraction of the object from the tomographic data, and the fitting of the surface to the extracted object. A number of ways are available to do the first subtask. For example, it is possible to search through the signal intensities in the voxels of a slice to discern regions where the material forming the object has sufficient signal contrast with surrounding regions. For example, signal intensities characteristic of bone in X-ray computed tomography have high contrast with surrounding tissue. A threshold may then be applied to the voxels to identify each one in the complete array lying in the desired object from all voxels not in the object.

Referring now to the second subtask, one technique for fitting the 3-D surface to the extracted object is known as the dividing cubes method which is disclosed in EP-A-216156. By the dividing cubes method, the surface of interest is represented by the union of a large number of directed points. The directed points are obtained by considering in turn each set of eight cubically adjacent voxels in the data base of contiguous slices. Gradient values are calculated for the cube vertices using difference equations. If the surface passes through a cube, then it is subdivided to form a number of smaller cubes, referred to as subcubes or subvoxels. By interpolation of the adjacent point densities and gradient values, densities are calculated for the subcube vertices and a gradient is calculated for the center of the subcube. The densities are tested (e.g., compared to a threshold). If some are greater and some less than the threshold, then the surface passes through the subcube. In that case, the location of the subcube is output with its normalized gradient, as a directed point. It is also possible to define the surface using a range of densities (e.g., an upper and lower threshold). The union of all directed points generated by testing all subcubes provides the surface representation. The directed points are then rendered into an image matrix (i.e., rasterized) for display on a CRT, for example.

Increasing the number of data points by interpolating into subcubes gives smooth, high resolution images. It is apparent from the above-mentioned application that dividing cubes avoids scan conversion by matching subcube faces to the pixel resolution of the display, thus greatly simplifying rendering.

Each typical display device capable of computer graphics applications has a fixed pixel resolution (e.g., 512 x 512 pixels on a CRT monitor). In implementing the dividing cubes method, subcube interpolation and rendering of the image matrix have been performed to match the pixel resolution of the display, even though that resolution may be greater than that needed or detectable by a viewer or that available in the original data. Thus, it has been found that in clinical applications of medical diagnostic imaging, that more resolution has been provided than could be discriminated. However, large images are desired because they are more comfortable and convenient to view.

Magnification techniques are well-known in the art of medical imaging. For example, EP-A-182237 (=US465013) discloses a method for converting the size of a digital image, whereby an equation is established for polynomial interpolation of a value of a new pixel based on values of a number of old pixels neighbouring the new pixel, weighted by precalculated coefficients.

The dividing cubes method operates on the original cross-sectional data by subdividing each input voxel until the projection, onto the image matrix, of a subdivided voxel is approximately the same size as a pixel in the display device. Hence, the number of points in the surface representation is directly proportional to the number of pixels in the display device. The time it takes to render a 3-D image, after the surface representation has been determined, is directly proportional to the number of points in the surface representation. Therefore, the rendering time is also directly proportional to the number of pixels in the display device.

Accordingly, the present invention aims to reduce the time required to produce 3-D images of tomographic data, and to reduce the time and processing required to go from a surface representation to a displayed image in 3-D computer graphics.

The present invention provides in one aspect an apparatus for generating images to be displayed from tomographic data on a pixel display, comprising surface generating means adapted to receive the tomographic data for extracting an object from the tomographic data and for fitting a surface to the extracted object; rendering means coupled to the surface generating means for producing a rendered image matrix having a number of elements which is smaller than the number of elements in the pixel display; and magnification means coupled to the rendering means for producing an interpolated image matrix having a number of elements which is substantially equal to the number of elements in the pixel display.

In another aspect, the invention provides a method for generating images to be displayed from tomographic data on a pixel display, comprising the steps of obtaining a surface definition from the tomographic data in the form of a plurality of directed points using a dividing cubes method; rendering the surface definition into a rendered image matrix having a size which is smaller than the size of the pixel display; and interpolating the rendered image matrix into an interpolated image matrix having a size substantially equal to the size of the pixel display.

In a preferred embodiment, the surface generating means is adapted to receive tomographic data for extracting a surface definition. The rendering means receives the surface definition for producing a rendered image matrix having a number of elements which is smaller than the number of elements in the pixel display. The magnification means receives the rendered image matrix for producing a magnified image matrix having a number of elements which is substantially equal to the number of elements in the pixel display. The time required to render an image capable of display equals the rendering time for a smaller matrix plus the interpolation time. The total image rendering time is thus reduced when the difference in size between the rendered matrix and the interpolated matrix is above a threshold.

The invention, both as to its organization and method of operation, may be better understood by reference to the following illustrative description taken in conjunction with the accompanying drawings in which:

FIGURE 1 represents a portion of an array of tomographic data from which a surface is to be extracted.

FIGURE 2 is a perspective view showing a large cube and its adjacent data points.

FIGURE 3 shows the gradient normals associated with each cube vertex.

FIGURE 4 shows subcubes and their gradient normals.

FIGURE 5 is a block diagram showing processing hardware for implementing the dividing cubes method to display 3-D image representations.

FIGURE 6 is a flow chart of an illustrative method of the invention.

FIGURE 7 is a block diagram of illustrative hardware according to the invention.

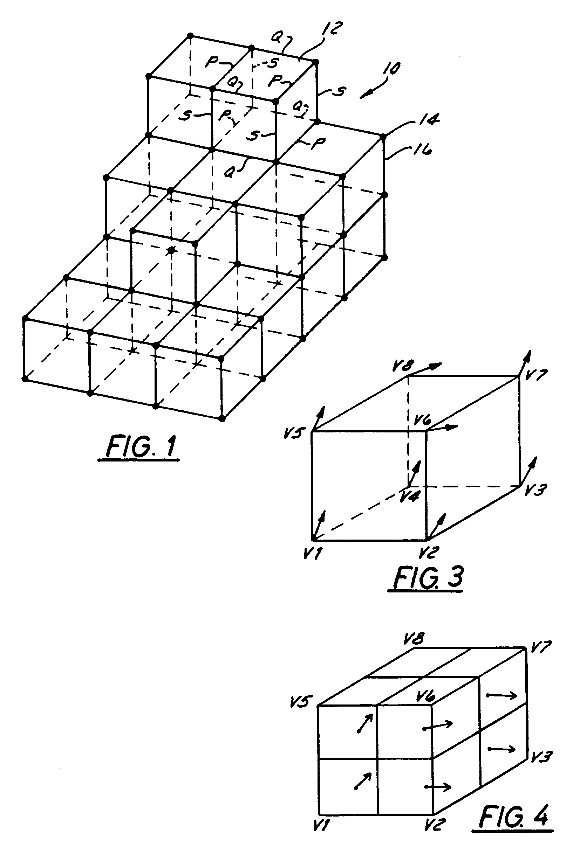

Referring to FIGURE 1, there is shown, generally at 10, a part of a tomographic array including an array of cubes 12 defined by nodes 14 connected by edges 16. Each node 14 represents a signal amplitude of a voxel of tomographic data and each edge 16 represents the distance from one voxel to its neighbor. Although the volumes described are referred to as cubes, edges 16 are not necessarily all of equal length and are probably not since slice thickness is usually not equal to pixel resolution within the slice. Pixel spacings P and Q and slice spacing S are shown for cube 12.

In a preferred implementation of the invention, each large cube is subdivided by integer factors (greater than or equal to zero) into a number of subcubes. The vertices of the subcubes are compared to a threshold (or thresholds) to identify subcubes through which the surface passes. For such identified subcubes, the subcube location and normalized gradient for the subcube center are concatenated resulting in a directed point. The process of subdivision uses a large cube and adjacent points as shown in FIG. 2. Cubically adjacent voxels from the tomographic data are selected to represent the vertices V1-V8 of the large cube. Points W1-W24 are adjacent to V1-V8 and are used in conjunction with V1-V8 to calculate the gradients at the vertices of the large cube. Subcube interpolation can then be performed on the cube and the gradients.

FIG. 3 shows examples of gradients associated with the vertices of a cube. FIG. 4 represents interpolated subcubes and gradient normals which define the subcubes within the large cube. Further details of subcube interpolation and generation of the surface representation are provided in co-pending European application No. 0318292.

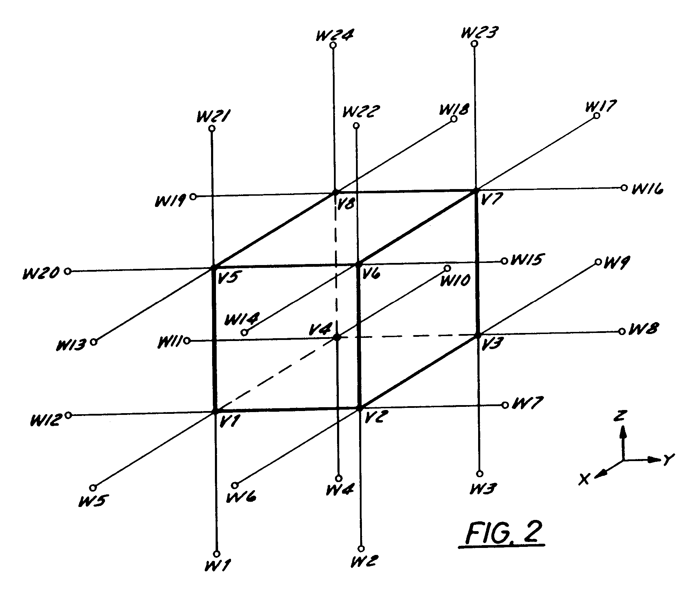

A first embodiment for a processing hardware implementation of the dividing cubes method is shown in FIG. 5. Two-dimensional tomographic slices are provided to a surface generator 40. Surface generator 40 implements the dividing cubes method to generate a number of directed points defining the surface that are fed to a display processor 41 which includes a Current-Transformation-Matrix (CTM) generator 42 and a renderer 43.

CTM generator 42 receives a viewer's commands via a command processor 45 for scaling, moving and rotating the object and forms the CTM which is provided to renderer 43 to operate on the directed points. Renderer 43 synthesizes the 3-D image (including projecting directed points onto 3-D pixels and determining shading of illuminated pixels) which is rasterized and sent to display 44 which could be a cathode-ray tube (CRT), for example.

The degree of subcube interpolation and subsequent rendering into an image matrix have, in the past, been matched to the pixel size of the display monitor. Thus, for a display having N x N pixels, subcubes are generated such that a subcube face approximately has the same size as a display pixel. All of the directed points generated from these subcubes must then be rendered in renderer 43 according to the contents of the CTM, so that an N x N image matrix is generated. Although the resulting image is smooth and has high resolution, the process is time consuming and, often, more resolution is provided than is actually necessary (or available in the data).

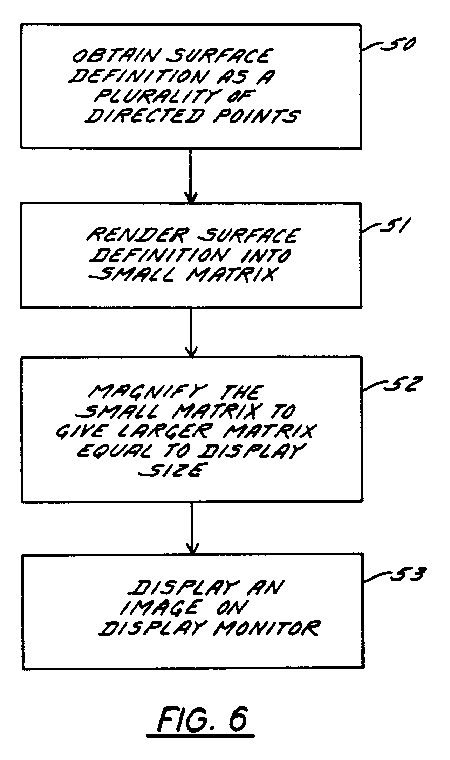

The present embodiment attempts to trade off some of that unneeded resolution for decreased rendering time and surface generation time. As shown in FIG. 6, this is accomplished in a method beginning with step 50 where a surface definition is extracted from tomographic slices as a union of a plurality of directed points. In step 51, the surface definition is rendered to form a rendered image matrix having a size (i.e., numbers of rows times columns) smaller than the size in the display monitor. For example, a display size could be N x N and the rendered image matrix would be M x M, where M < N. Display and matrix sizes with an unequal number of rows and columns are also easily accommodated by having the total number of matrix elements less than the total number of display pixel elements.

In step 52, the M x M rendered matrix is magnified in order to generate an N x N magnified image matrix matching the display size. Matrix interpolation to generate a larger matrix can be done in very short times using available techniques. One example of a magnification technique and apparatus is given in precited U.S. Patent No. 4,653,013, which is hereby incorporated by reference. It has been found that linear interpolation results in satisfactory images and is faster than other methods.

In step 53, the N x N image is displayed. Rather than having the rendering times on the order of N² as in the prior art, the present invention obtains a rendering time on the order of M² + Tᵢ where Tᵢ is the time required to perform the image interpolation. For a large enough difference between N and M, the decrease in rendering time is larger than Tᵢ, and the image rendering time of the complete system is improved.

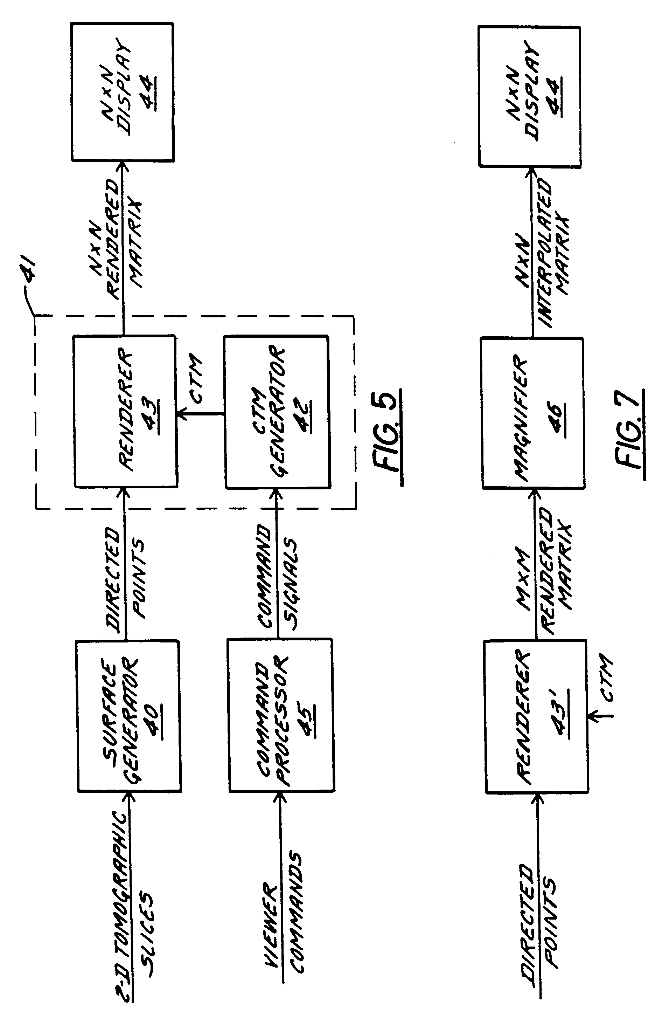

FIG. 7 shows a preferred embodiment of the invention including a renderer 43′ which produces an M x M rendered image matrix. That matrix is magnified in magnifier 46 to produce an N x N magnified image matrix which is provided to N x N display 44. When using linear interpolation, interpolator 46 may, for example, be comprised of the TMS 320 family of integrated circuits available from Texas Instruments.

## Claims

1. An apparatus for generating images to be displayed from tomographic data on a pixel display, comprising:
surface generating means (40) adapted to receive the tomographic data for extracting an abject from the tomographic data and for fitting a surface to the extracted object:
rendering means (43) coupled to the surface generating means for producing a rendered image matrix having a number of elements which is smaller than the number of elements in the pixel display; and
magnification (42, 46) means coupled to the rendering means for producing an interpolated image matrix having a number of elements which is substantially equal to the number of elements in the pixel display.

2. The apparatus of claim 1 wherein the means for fitting a surface comprises means for generating directed points using a dividing cubes method.

3. The apparatus according to claims 1 or 2 wherein the rendered image matrix is M x M and the interpolated image matrix is N x N, where M is less than N.

4. The apparatus according to any one of claims 1 to 3 wherein the interpolation means performs linear interpolation.

5. A method for generating images to be displayed from tomographic data on a pixel display, comprising the steps of:
generating (50) a surface definition from the tomographic data in the form of a plurality of directed points using a dividing cubes method;
rendering (51) the surface definition into a rendered image matrix having a size which is smaller than the size of the pixel display; and
interpolating (52) the rendered image matrix into an interpolated image matrix having a size substantially equal to the size of the pixel display.

6. The method of claim 5 comprising the step of displaying (53) the interpolated image matrix.

7. The method of claims 5 or 6 wherein the step of obtaining the surface definition employs a dividing cubes technique for generating the directed points.

8. The method of any one of claims 5 to 7 wherein the step of rendering comprises operating upon the directed points to generate the rendered image matrix to have a size selected relative to the size of the interpolated image matrix such that the difference between the times respectively required to generate the interpolated image matrix and the rendered image matrix is greater than the time required to perform the interpolating step.

## Patentansprüche

1. Einrichtung zum Generieren von Bildern, die aus tomografischen Daten auf einem Pixel-Display darzustellen sind, enthaltend:
eine Oberflächengenerierungseinrichtung (40), die die tomografischen Daten empfangen kann, zum Extrahieren eines Objektes aus den tomografischen Daten und zum Anpassen einer Oberfläche an das extrahierte Objekt,
eine Wiedergabeeinrichtung (43), die mit der Oberflächengenerierungseinrichtung verbunden ist, zum Erzeugen einer wiedergegebenen Bildmatrix mit einer Anzahl von Elementen, die kleiner als die Anzahl der Elemente in dem Pixel-Display ist, und
eine Vergrößerungseinrichtung (42, 46), die mit der Wiedergabeeinrichtung verbunden ist, zum Erzeugen einer interpolierten Bildmatrix mit einer Anzahl von Elementen, die im wesentlichen gleich der Anzahl der Elemente in dem Pixel-Display ist.

2. Einrichtung nach Anspruch 1, wobei die Einrichtung zum Anpassen einer Oberfläche eine Einrichtung aufweist zum Generieren gerichteter Punkte unter Verwendung eines Würfelteilverfahrens.

3. Einrichtung nach Anspruch 1 oder 2, wobei die wiedergegebene Bildmatrix M x M und die interpolierte Bildmatrix N x N ist, wobei M kleiner als N ist.

4. Einrichtung nach einem der Ansprüche 1 bis 3, wobei die Interpolisationseinrichtung eine lineare Interpolisation ausführt.

5. Verfahren zum Generieren von Bildern, die aus tomografischen Daten auf einem Pixel-Display darzustellen sind, enthaltend die Schritte:
Generieren (50) einer Oberflächendefinition aus den tomografischen Daten in der Form von mehreren gerichteten Punkten unter Verwendung eines Würfelteilverfahrens,
Wiedergabe (51) der Oberflächendefinition in eine wiedergegebene Bildmatrix mit einer Größe, die kleiner als die Größe des Pixel-Displays ist, und
Interpolieren (52) der wiedergegebenen Bildmatrix in eine interpolierte Bildmatrix in einer Größe, die im wesentlichen gleich der Größe des Pixel-Displays ist.

6. Verfahren nach Anspruch 5, wobei die interpolierte Bildmatrix dargestellt wird (53).

7. Verfahren nach Anspruch 5 oder 6, wobei der Schritt zum Generieren der Oberflächendefinition eine Würfelteiltechnik verwendet zum Generieren der gerichteten Punkte.

8. Verfahren nach einem der Ansprüche 5 bis 7, wobei der Wiedergabeschritt enthält, daß die gerichteten Punkte bearbeitet werden, um die wiedergegebene Bildmatrix zu generieren, damit sie eine gewählte Größe relativ zur Größe der interpolierten Bildmatrix hat, so daß die Differenz zwischen den Zeiten, die auf entsprechende Weise zum Generieren der interpolierten Bildmatrix und der wiedergegebenen Bildmatrix erforderlich sind, größer als die Zeit ist, die zum Ausführen des Interpolisationsschrittes erforderlich ist.

## Revendications

1. Appareil pour produire, à partir de données tomographiques, des images devant être affichées sur un dispositif d'affichage par pixels, qui comprend :
- des moyens (40) de création de surface, aptes à recevoir les données tomographiques pour extraire un objet de ces données tomographiques et pour adapter une surface à l'objet extrait,
- des moyens de restitution (43), couplés aux moyens de création de surface pour produire une matrice d'image restituée ayant un nombre d'éléments qui est inférieur au nombre d'éléments du dispositif d'affichage par pixels, et
- des moyens (42, 46) de grossissement, couplés auxdits moyens de restitution pour donner une matrice d'image interpolée ayant un nombre d'éléments qui est sensiblement égal au nombre d'éléments du dispositif d'affichage par pixels.

2. Appareil selon la revendication 1, dans lequel le moyen pour adapter une surface comprend des moyens pour produire des points orientés à l'aide d'un procédé de division en cubes.

3. Appareil selon la revendication 1 ou 2, dans lequel la matrice d'image restituée est une matrice M x M et la matrice d'image interpolée est une matrice N x N, sachant que M est plus petit que N.

4. Appareil selon l'une quelconque des revendications 1 à 3, dans lequel les moyens d'interpolation effectuent une interpolation linéaire.

5. Procédé pour produire, à partir de donnée tomographiques, des images devant être affichées sur un dispositif d'affichage par pixels, qui comprend les étapes consistant à :
- créer (50) une définition de surface à partir des données tomographiques sous la forme d'une pluralité de points orientés, en utilisant un procédé de division en cubes,
- restituer (51) la définition de surface sous la forme d'une matrice d'image restituée ayant une taille plus petite que la taille du dispositif d'affichage par pixels, et
- interpoler (52) la matrice d'image restituée pour former une matrice d'image interpolée ayant une taille sensiblement égale à la taille du dispositif d'affichage par pixels.

6. Procédé selon la revendication 5, qui comprend l'étape consistant à afficher (53) la matrice d'image interpolée.

7. Procédé selon la revendication 5 ou 6, dans lequel l'étape d'obtention de la définition de surface utilise une technique de division en cubes pour produire les points orientés.

8. Procédé selon l'une quelconque des revendications 5 à 7, dans lequel l'étape de restitution comprend le fait d'agir sur les points orientés pour produire la matrice d'image restituée afin qu'elle ait une taille sélectionnée par rapport à la taille de la matrice d'image interpolée, de telle sorte que la différence entre les temps respectivement requis pour créer la matrice d'image interpolée et la matrice d'image restituée soit plus grande que le temps requis pour effectuer l'étape d'interpolation.
